(19) Europäisches Patentamt / European Patent Office / Office européen des brevets

(11) **EP 2 717 229 B1**

(12) **FASCICULE DE BREVET EUROPEEN**

(45) Date de publication et mention
de la délivrance du brevet:
**28.02.2018 Bulletin 2018/09**

(51) Int Cl.:
***G06T 19/00*** *(2011.01)*

(21) Numéro de dépôt: **13186858.0**

(22) Date de dépôt: **01.10.2013**

(54) **Système de visualisation pour un aéronef en approche d'une piste d'atterrissage et procédé de visualisation associé**

Visualisierungssystem für Luftfahrzeuge über einer Landebahn und entsprechendes Verfahren

Visualisation system for aircraft approaching a landing zone and corresponding method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2012 FR 1202675**

(43) Date de publication de la demande:
**09.04.2014 Bulletin 2014/15**

(73) Titulaire: **Dassault Aviation
75008 Paris (FR)**

(72) Inventeurs:
• **Baudson, Olivier
75017 PARIS (FR)**
• **Turpin, Arnaud
92100 BOULOGNE (FR)**

(74) Mandataire: **Lavoix
2, place d'Estienne d'Orves
75441 Paris Cedex 09 (FR)**

(56) Documents cités:
• **PATRICIA MAY VERVERS: "Design and Flight Test of a Primary Flight Display Combined Vision System", SAE INTERNATIONAL TECHNICAL PAPERS - INT. JOUR. AEROSPACE, 18 octobre 2011 (2011-10-18), pages 738-750, XP008162878,**
• **GLORIA L CALHOUN\* A ET AL: "Synthetic vision system for improving unmanned aerial vehicle operator situation awareness", mai 2005 (2005-05), ENHANCED AND SYNTHETIC VISION, SPIE, PAGE(S) 219 - 230, XP009168010, ISBN: 0-8194-5787-6 section 3.2.3; \* abrégé; figure 6 \***
• **Ed Mckenna: "Synthetic Vision Systems", Avionics Magazine, 1 mai 2012 (2012-05-01), XP055065979, Extrait de l'Internet: URL:http://www.aviationtoday.com/av/issue/ feature/Synthetic-Vision-Systems_76212.htm l#.UbW6n6z4J7l [extrait le 2013-06-10]**
• **BAILEY R E ET AL: "Crew and display concepts evaluation for synthetic/enhanced vision systems", PROCEEDINGS OF THE SPIE - THE INTERNATIONAL SOCIETY FOR OPTICAL ENGINEERING SPIE-INT. SOC. OPT. ENG. USA, vol. 6226, no. 1, 20 mai 2006 (2006-05-20) , pages 62260G-1, XP055065982, ISSN: 0277-786X**

**Description**

La présente invention concerne un système de visualisation pour un aéronef, selon le préambule de la revendication 1.

Un tel système est destiné à être implanté dans le cockpit d'un aéronef pour être associé à un afficheur du cockpit. L'afficheur est par exemple un afficheur au moins partiellement transparent, tel qu'un écran semi-transparent placé devant un pare-brise du cockpit, un système de projection d'images sur le pare-brise du cockpit, un pare-soleil semi-transparent, un viseur de casque, une lunette semi-transparente proche de l'oeil. En variante, l'afficheur constitue un écran tête basse intégré dans le tableau de bord du cockpit.

Pour faciliter le pilotage de l'aéronef, et donner au pilote une indication globale sur la structure du terrain situé en regard de l'aéronef, il est connu de générer des images synthétiques du paysage situé à l'avant de l'aéronef, à partir notamment de bases de données topographiques, en fonction de la position courante de l'aéronef déterminée par le système de navigation de l'aéronef.

Les images synthétiques sont représentatives de l'environnement situé à l'avant de l'appareil, tel qu'il peut être observé à travers le pare-brise par un pilote dans le cockpit. Ces images synthétiques comprennent généralement une représentation synthétique surfacique du terrain.

Un tel système de visualisation permet au pilote de se représenter le relief qui peut se trouver devant l'aéronef, notamment lorsque la visibilité est faible ou nulle.

De tels systèmes de visualisation fournissent une aide substantielle au pilote, mais s'avèrent parfois imprécis, compte tenu des erreurs possibles dans le positionnement de l'aéronef, et/ou dans les données topographiques disponibles dans les bases de données. Il est donc nécessaire de disposer en parallèle d'une vision réelle de l'environnement se situant à l'extérieur de l'aéronef.

Pour ce faire, des systèmes de visualisation améliorée (« Enhanced Vision Systems ou « EVS » en anglais) ont été développés.

Ces systèmes comprennent généralement une caméra embarquée dans le nez de l'aéronef. La caméra, qui comporte par exemple des capteurs fonctionnant dans l'infrarouge, améliore la visibilité à l'avant de l'aéronef, en détectant le terrain et toutes les structures présentes sur le terrain comme par exemple des lumières présentes sur la piste ou autour de la piste, en particulier les éclairages des rampes d'approche.

Sur la base des données d'image collectées par la caméra, une image réelle de l'environnement présent à l'avant de l'aéronef est obtenue.

De tels systèmes de visualisation permettent donc de confirmer la position de la piste par rapport à l'aéronef et/ou par rapport à l'environnement, et facilitent la décision du pilote lorsqu'il atteint l'altitude de décision, à laquelle il doit choisir de poursuivre ou non l'atterrissage.

Des systèmes de visualisation hybrides ont par ailleurs été développés. Ces systèmes affichent à la fois une première région comprenant une image totalement synthétique, et une deuxième région comprenant une image réelle obtenue à partir d'un système de vision amélioré comprenant une caméra infrarouge.

Un tel système fournit donc une aide substantielle au pilote pour identifier la piste sur laquelle il va atterrir. Toutefois, la longueur de la zone avant sur l'écran est faible, de sorte que l'aide fournie au pilote intervient uniquement dans la phase finale de l'atterrissage, au voisinage de la piste, lorsque le pilote a déjà dépassé la hauteur de décision.

Un tel système ne donne donc pas entière satisfaction. En effet, lorsque le pilote approche la piste, mais est situé à une distance substantielle de celle-ci, la vision offerte par le système est essentiellement fondée sur une image artificielle, sauf dans la zone avant contiguë à la piste, sur une longueur très faible. Le pilote peut donc ne pas voir certains détails visuels, notamment lorsqu'il atteint la hauteur de décision, au moment où il doit pouvoir disposer d'une vision suffisante de la piste afin de décider s'il poursuit l'atterrissage, ou s'il remet les gaz.

L'article 'Design and Flight Test of a Primary Flight Display Combined Vision System » SAE International Technical Papers-Int. Tour. Aerospace p.p. 738-750 d'octobre 2011 décrit un système hybride de visualisation pour aéronef.

Un but de l'invention est donc d'obtenir un système de visualisation qui facilite la tâche du pilote, en vue de déterminer s'il poursuit ou non l'atterrissage, lors d'une phase d'approche.

A cet effet, l'invention a pour effet un système de visualisation selon la revendication 1.

Le système selon l'invention peut comprendre l'une ou plusieurs des caractéristiques des revendications 2 à 11.

L'invention a également pour objet un procédé de visualisation pour aéronef, selon la revendication 12.

Le procédé selon l'invention peut comprendre l'une ou plusieurs des caractéristiques des revendications 13 à 16.

L'invention sera mieux comprise à la lecture de la description qui va suivre, donnée uniquement à titre d'exemple, et faite en se référant aux dessins annexés, sur lesquels :

- la figure 1 est une vue schématique d'un système de visualisation d'aéronef selon l'invention ;
- la figure 2 est une vue schématique d'un cockpit dans lequel le système de visualisation est implanté ;
- la figure 3 est une vue d'un afficheur du système de la figure 1, dans une première configuration d'affichage lors d'un procédé de visualisation selon l'invention ;
- la figure 4 est une vue schématique de l'évolution de l'aéronef dans la première configuration ;

- la figure 5 est une vue analogue à la figure 4 lorsque l'aéronef se rapproche de la piste ;
- la figure 6 est une vue schématique de dessus illustrant le positionnement topographique des différentes zones dépourvues d'image synthétique sur le terrain ;
- la figure 7 est une vue de dessus de l'aéronef lors de son évolution ;
- la figure 8 est une vue analogue à la figure 5, pour une variante de mise en oeuvre du procédé selon l'invention, dans une phase initiale d'approche ;
- la figure 9 est une vue analogue à la figure 8 dans une phase ultérieure d'approche.

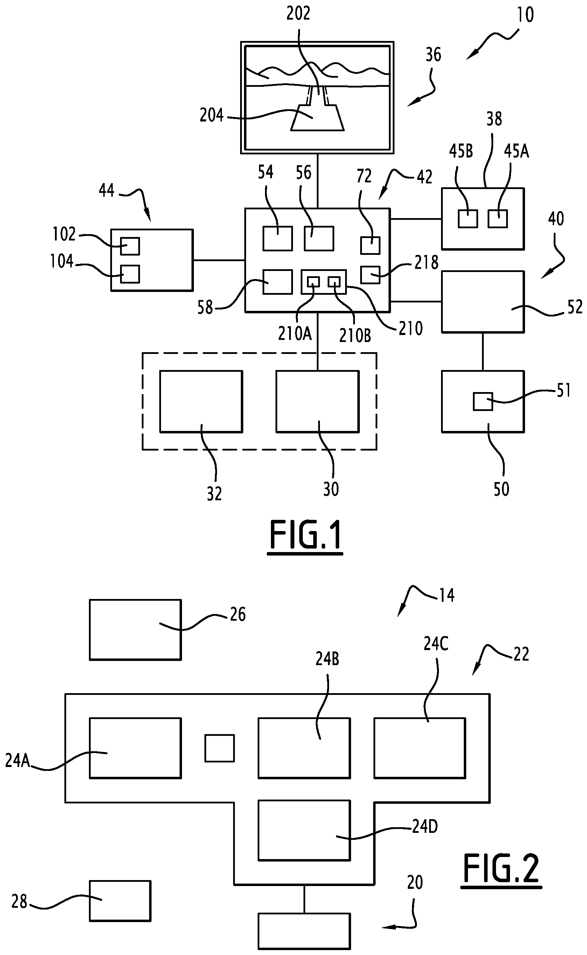

Un premier système 10 de visualisation pour un aéronef 12 selon l'invention est illustré schématiquement par la figure 1.

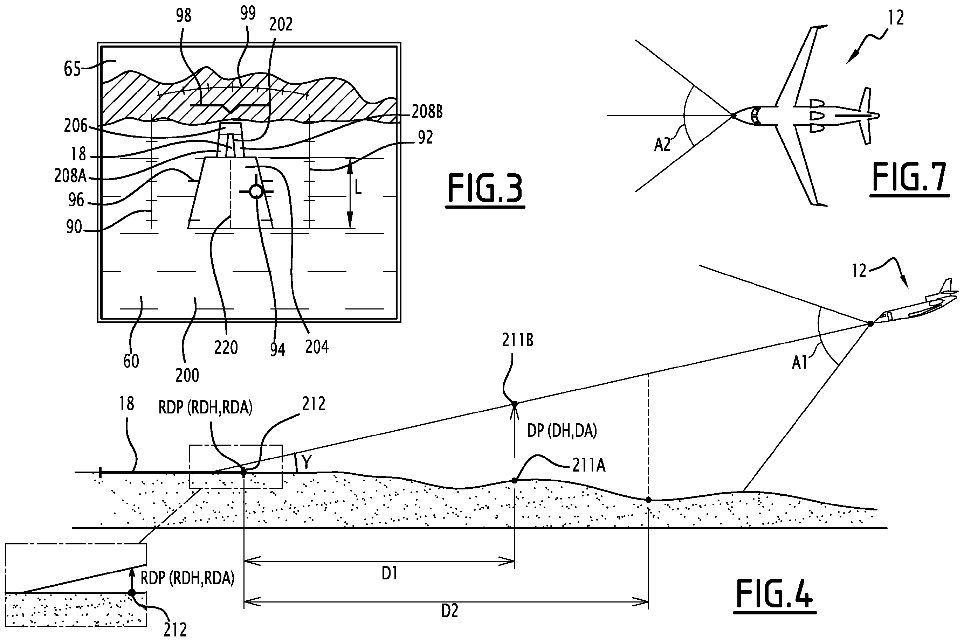

Ce système 10 est destiné à être monté dans un aéronef 12 visible schématiquement sur la figure 4, pour permettre l'affichage d'informations sur un afficheur présent dans le cockpit 14 de l'aéronef représenté schématiquement sur la figure 2.

Le système 10 est destiné à assister le pilote de l'aéronef pour se représenter le terrain 16 situé en regard de l'aéronef 12, et notamment une piste d'atterrissage 18 présente sur le terrain 16.

En référence à la figure 2, le cockpit 14 est muni d'un système principal d'affichage 22 raccordé à une unité centrale d'avionique 20.

Le système principal 22 permet à l'équipage de piloter l'aéronef, de gérer sa navigation, de surveiller et commander les différents systèmes fonctionnels présents dans l'aéronef. Le système 22 comporte une planche de bord munie d'une pluralité d'écrans de base 24A à 24D formant des afficheurs tête basse.

Dans cet exemple, le cockpit 14 est aussi avantageusement muni d'un écran semi-transparent tête haute 26, placé en regard du pare-brise. Le cockpit 14 est par ailleurs muni d'un organe de commande 28 du pilotage de l'aéronef, tel qu'une manette ou un manche.

De manière connue, les écrans de base 24A et 24C sont par exemple des écrans primaires d'affichage destinés à l'affichage de paramètres de vol de l'aéronef. Les écrans de base 24B et 24D sont par exemple des écrans multifonctionnels de navigation et/ou de suivi et de commande des systèmes d'avionique.

Le système d'affichage principal 22 est muni d'un ensemble de gestion d'affichage (non représenté) propre à afficher les différentes fenêtres présentes sur ces écrans 24A à 24D.

L'unité centrale d'avionique 20 est raccordée à un système 30 de mesure et de positionnement spatial de l'aéronef 12, et, avantageusement, à un système 32 de communication extérieure, notamment pour le guidage de l'aéronef dans son approche vers la piste d'atterrissage 18.

Le système 30 de mesure et de positionnement comporte par exemple des capteurs de mesure de paramètres extérieurs à l'aéronef tel que la température, la pression ou la vitesse, des capteurs de mesure de paramètres internes à l'aéronef et à ses différents systèmes fonctionnels, et des capteurs de positionnement, tel que des capteurs GPS , des centrales à inertie, ou/et un altimètre.

Les capteurs de positionnement sont propres à fournir une information sur la position géographique de l'aéronef, sur sa vitesse, son cap et son attitude (assiette longitudinale, angle de roulis).

Le système de communication extérieure 32 inclut par exemple, des systèmes radio VOR/LOC, ADS, DME, ILS, MLS ou/et des systèmes radars pour la gestion et le guidage de l'approche vers la piste 18.

En référence à la figure 1, le système de visualisation 10 selon l'invention est raccordé au système 30 de mesure et de positionnement. Il est avantageusement raccordé à l'unité centrale d'avionique 20.

Le système de visualisation 10 comporte au moins un afficheur 36, un ensemble 38 de génération d'images synthétiques, et avantageusement, un ensemble 40 de génération d'images réelles.

Il comporte également un ensemble 42 de gestion de l'interface graphique de l'afficheur 36 raccordé à chacun des ensembles 38, 40 et au système de positionnement 30.

Le système 10 comporte en outre une interface homme/machine 44 pour le réglage des paramètres de l'affichage sur l'afficheur 36.

L'afficheur 36 est par exemple un des écrans 24A à 24B ou/et est l'écran semi-transparent tête haute 26 du cockpit 14. En variante, l'afficheur 36 est un système de projection d'images sur le pare-brise du cockpit, un pare-soleil semi-transparent, un viseur de casque, ou une lunette semi-transparente proche de l'oeil.

Dans un premier mode de réalisation, qui sera décrit par la suite, l'afficheur 36 du système de visualisation 10 selon l'invention est l'écran semi-transparent tête haute 26 du cockpit 14.

Dans ce cas, l'afficheur 36 est propre à être rendu partiellement transparent pour autoriser la visualisation de l'environnement situé à l'avant de l'afficheur 36, par transparence. L'afficheur 36 est propre à être rendu au moins partiellement opaque par l'affichage d'images synthétiques ou d'images réelles générées par l'un des ensembles de génération 38, 40, et fournies par l'ensemble de gestion 42, comme cela sera décrit plus bas.

Les dimensions de l'afficheur 36 correspondent à un volume d'observation 44A dans l'espace situé à l'avant de l'aéronef 12, défini sensiblement par une pyramide.

En référence à la figure 4 et à la figure 7, le volume d'observation 44A présente un angle d'ouverture vertical, suivant un plan axial vertical de l'aéronef 12 égal à A1 et un angle d'ouverture horizontal égal à A2 suivant un plan axial horizontal de l'aéronef dans un repère lié à l'aéronef 12.

L'angle d'ouverture A1 est défini en excluant les régions du terrain 16 non visibles par le pilote du fait de la structure du cockpit et de l'assiette longitudinale de l'aéronef 12.

L'ensemble 38 de génération d'images synthétiques est raccordé à l'ensemble de gestion 42. Il comporte une mémoire et un processeur.

Il comporte au moins une base de données 45A contenue dans la mémoire comprenant des données topographiques associées au terrain au dessus et à l'avant duquel évolue l'aéronef 12.

Il comporte en outre un module 45B de génération d'images propre à engendrer dynamiquement des images synthétiques du terrain situé en regard et à l'avant de l'aéronef, sur la base de la position géographique courante de l'aéronef 12, de son attitude (notamment cap, assiette longitudinale, angle de roulis, lacet), telles que déterminées à l'aide du système de positionnement 30 et sur la base des données topographiques issues d'au moins une des base de données 45A.

A cet effet, la ou les bases de données 45A sont choisies parmi des bases de données de terrain, les bases de données d'obstacles, les bases de données de navigation, des bases de données géopolitiques, des bases de données d'utilisation d'espace aérien, des bases de données de type de terrain (étendues et cours d'eau, zones terrestres etc.)

Le module 45B est ainsi propre à engendrer, à chaque instant donné, une image synthétique surfacique qui correspond à une représentation visuelle de l'environnement qui pourrait être observé par le pilote à travers le pare-brise à cet instant donné, lorsque l'aéronef occupe une position géographique et une attitude donnée.

L'image synthétique est propre à couvrir partiellement le volume d'observation 44A défini par les dimensions de l'afficheur 36.

Elle forme en particulier une représentation synthétique surfacique du terrain présent à l'avant de l'aéronef et de son relief.

Cette représentation, en deux dimensions sur l'afficheur 36, comporte au moins des régions de l'afficheur 36 sous forme de surfaces remplies qui correspondent à des zones de terrain et/ou au relief présent sur ces zones.

L'image synthétique du terrain peut comprendre des données aéronautiques comme des aéroports et leurs pistes d'atterrissage ou/et des repères géographiques tels que des villes, des étendues d'eau (rivières, lacs, mers).

Le remplissage de l'image synthétique par des pixels opaques ou partiellement opaques est avantageusement supérieur à 50% de la surface totale de l'image.

Dans l'exemple représenté sur la figure 1, l'aéronef 10 comporte en outre un ensemble de génération 40 d'images réelles à l'avant de l'aéronef.

Cet ensemble de génération 40 comporte au moins un capteur 50 de mesure optique, tel qu'une caméra 51 et un module 52 de génération d'images réelles raccordé au capteur 50.

En variante, l'ensemble 40 comporte une pluralité de capteurs 50 fonctionnant à des longueurs d'onde différentes.

Le capteur 50 est par exemple une caméra visible ou infrarouge ou une caméra dans le domaine millimétrique qui est montée dans le nez de l'aéronef 12 ou au voisinage du nez.

L'ensemble de génération d'images réelles 40 est calibré pour observer l'espace situé à l'avant de l'aéronef 12 dans un champ de vision correspondant de préférence au volume d'observation 44A. Il est propre à mesurer et à fournir dynamiquement au module 52 des données d'images ponctuelles observées à une résolution donnée dans son champ de vision.

Le module 52 est propre à traiter dynamiquement les données ponctuelles d'image reçues du ou de chaque capteur 50 pour former à chaque instant une image réelle, obtenue à partir des données d'image détectées par le ou chaque capteur 50, pour son affichage sur l'afficheur 36.

L'ensemble 42 de gestion de l'interface comporte par exemple un processeur 54 et un mémoire 56. Il comporte des moyens 58 de gestion d'affichage d'images sur l'afficheur 36.

En référence à la figure 3, les moyens de gestion 58 de l'affichage sur l'afficheur sont propres à afficher dynamiquement sur au moins une première région 60 de l'afficheur 36, une première zone périphérique 200 comportant une image synthétique provenant de l'ensemble de génération d'images synthétiques 38. L'image synthétique comprend au moins une représentation synthétique surfacique du terrain 16 situé en regard de l'aéronef 12.

Les moyens de gestion 58 sont propres à maintenir dépourvue de représentation synthétique surfacique du terrain 16 au moins une première zone 202 représentative de la position de la piste 18, centrée sur la piste 18, au moins une zone avant 204, contigüe à la zone centrée, avantageusement une zone arrière 206, et deux zones latérales 208A, 208B, respectivement à l'arrière de la zone centrée 202, et sur les côtés de la zone centrée 202.

Les moyens de gestion 58 sont propres à convertir la position topographique de la piste 18 sur le terrain, obtenue par exemple à partir de la base de données 45A, en une position locale sur l'afficheur 36.

Ainsi, la zone centrée 202 correspond à la position sur l'afficheur 36 du contour de la piste 18, tel qui est défini par les données topographiques provenant de l'ensemble de génération d'images synthétiques 38. Le contour de la zone centrée 202 est avantageusement matérialisé par une ligne.

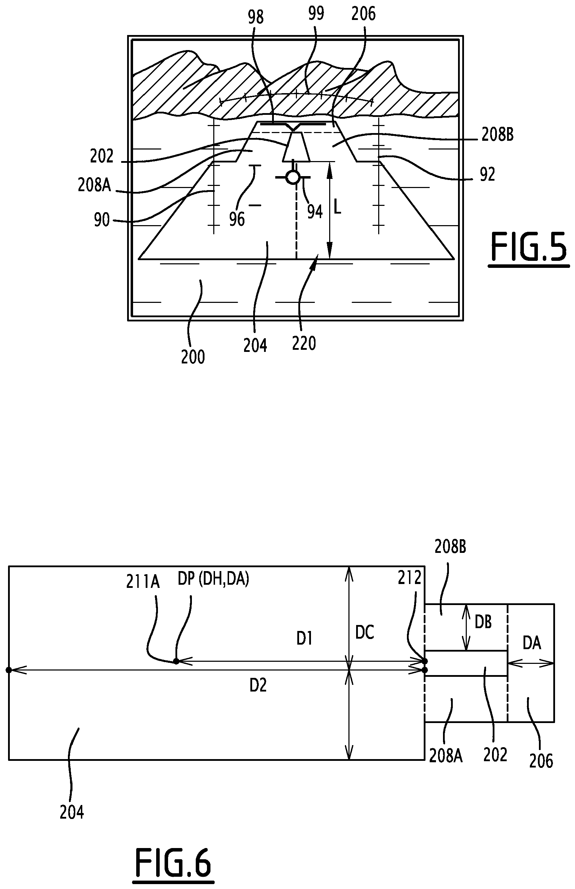

Les zones latérales 208A, 208B dépourvues de représentation synthétique surfacique du terrain 16 sur l'afficheur 36 sont représentatives de régions périphériques 208A, 208B situées autour de la piste 18. Ces régions 208A, 208B présentent respectivement une largeur topographique DB prise à partir de la périphérie de la piste, représentées sur la figure 6, avec les mêmes références numériques que celles de la figure 3.

La largeur topographique DB est par exemple comprise entre 5 m et 5000 m.

Avantageusement, la zone arrière 206 correspond également à une région topographique de longueur topographique DA située à l'arrière de la piste 18.

La longueur DA est par exemple comprise entre 5 m et 5000 m.

Selon l'invention, l'ensemble de gestion 42 comporte des moyens 210 de définition dynamique de la longueur L de la zone avant 204 sur l'afficheur 36 en fonction d'une position verticale de décision DP associée à une approche donnée sur la piste 18.

La position verticale de décision DP est par exemple l'altitude de décision DA, ou la hauteur de décision DH.

L'altitude de décision DA est référencée par rapport au niveau de la mer. Elle est généralement calculée à partir d'une altitude pression obtenue à partir d'un altimètre barométrique.

La hauteur de décision DH est référencée par rapport au niveau du seuil de piste 18. Elle est généralement calculée à partir d'une altitude mesurée à partir d'un radioaltimètre.

La position verticale de décision DP (soit l'altitude de décision DA, soit la hauteur de décision DH) associée à une approche donnée sur chaque piste 18 est une donnée tabulée, par exemple dans un document de référence accessible au pilote, ou encore dans une base de données 45A associée au système de navigation et/ou à l'ensemble de génération 38.

Dans la base de données, à chaque approche sur chaque piste 18 présente sur le terrain 16 est associée au moins une position verticale de décision DP (soit l'altitude de décision DA, soit la hauteur de décision DH) correspondant à ladite piste 18.

Cette position verticale de décision DP correspond généralement à la position verticale minimale (altitude minimale par rapport au niveau de la mer pour l'altitude de décision DA , hauteur minimale par rapport au seuil de piste pour la hauteur de décision DH) en deçà de laquelle, le pilote, lors de l'approche finale, doit remettre les gaz, s'il n'a pas tous les repères visuels requis pour poursuivre la descente.

Cette position verticale minimale dépend de l'équipement présent au sol associé à l'approche considérée sur la piste 18, de l'équipement correspondant du système de communication 32 de l'aéronef 12 (par exemple GPS, ILS, VOR...), de la certification de l'aéronef 12 pour réaliser une approche donnée, et/ou de la qualification correspondante de l'équipage.

La hauteur de décision DH est par exemple comprise entre 0 pieds et 200 pieds (soit 61 m environ), au dessus du seuil de piste. L'altitude de décision DA est par exemple comprise entre 100 pieds (soit 30,5 m environ) et 1000 pieds (soit 305 m environ).

En référence aux figures 4 et 6, les moyens 210 de définition dynamique comprennent par exemple des premiers moyens 210A de calcul d'une distance topographique D2, correspondant à la longueur topographique de la zone avant 204, en fonction de la distance D1 topographique d'approche séparant horizontalement le seuil de piste 212 et la projection 211A de la position théorique 211B de l'aéronef 12 à la position verticale de décision DP sur une droite horizontale passant par le seuil de piste 212.

Les moyens 210 comportent en outre des deuxièmes moyens 210B de calcul de la longueur L de la zone avant 204 sur l'afficheur 36 en fonction de la distance topographique D2.

Comme illustré par la figure 4, les moyens 210A de calcul sont aptes à calculer la distance topographique d'approche D1 séparant horizontalement le seuil de piste 212 et la projection 211A de la position théorique 211B de l'aéronef 12 à la position verticale de décision DP sur une droite horizontale passant par le seuil de piste 212.

Les moyens de calcul 210A sont aptes à interroger la base de données 45A pour recueillir la position verticale de décision DP correspondant à l'approche choisie sur la piste 18, la pente $\gamma$ souhaitée de descente, la position topographique du seuil 212 de la piste 18, et éventuellement, la position verticale de référence RDP souhaitée au seuil 212, à savoir l'altitude de référence au seuil RDA, ou la hauteur de référence au seuil RDH.

Les moyens de calcul 210A sont par exemple propres à calculer la distance D1 par l'équation

$$D1 = \frac{(DP - RDP)}{\tan\gamma}, \text{ soit } D1 = \frac{(DH - RDH)}{\tan\gamma} \text{ en ce}$$

qui concerne la hauteur de de décision DH, soit

$$D1 = \frac{(DA - RDA)}{\tan\gamma}, \text{ en ce qui concerne l'altitude de}$$

décision DA.

Ils sont propres à en déduire une distance topographique D2, correspondant à la longueur topographique de la zone avant 204 en fonction de la distance d'approche D1.

Cette distance D2 est par exemple un multiple de la distance d'approche D1, par exemple compris entre 1 et 3, avantageusement entre 1,2 et 2, et par exemple égal à 1,5.

Les deuxièmes moyens de calculs 210B sont propres à calculer la longueur L de la zone avant 204 sur l'afficheur 36 en fonction de la distance topographique D2.

La longueur L correspond à la longueur de la représentation graphique de la zone avant 204 sur l'afficheur 36 en fonction de la distance topographique D2 et de la position de l'aéronef 12.

La zone avant 204 visible sur l'afficheur 36 présente donc une longueur sur l'écran qui dépend de la distance d'approche D1, correspondant à la distance séparant horizontalement le seuil de piste 212 de la position théorique de l'aéronef 12 à la position verticale de décision DP.

La zone avant 204 présente par ailleurs une demi-largeur topographique DC supérieure ou égale à la demi-largeur topographique de la zone centrée 202, et avantageusement supérieure ou égale à la somme de la demi-largeur topographique de la zone centrée 202 et de la largeur d'une zone latérale 208A, 208B.

Dans un mode de réalisation, aucune image réelle du terrain 16 obtenue à partir de l'ensemble 40 n'est affichée dans la zone avant 204, dans la zone arrière 206 et dans les zones latérales 208A, 208B.

Le pilote peut alors observer par transparence à travers l'afficheur 36 l'espace situé à l'avant de l'aéronef dans ces zones.

Dans une variante, les moyens de gestion 58 de l'affichage sont propres à afficher dynamiquement, dans la zone avant 204, dans la zone arrière 206 et dans les zones latérales 208A, 208B, une image réelle obtenue à partir de l'ensemble de génération d'images réelles 40.

Avantageusement, l'image réelle obtenue à partir de l'ensemble de génération 40 est tronquée pour n'être affichée que dans la zone centrée 202, et avantageusement, dans les zones latérales 208A, 208B et dans la zone arrière 206. Dans ce cas, la zone périphérique 200 est dépourvue d'affichage d'images réelles engendrées par l'ensemble de génération 40.

En variante, les images réelles engendrées par l'ensemble de génération 40 sont affichées à la fois dans la zone centrée 202, dans les zones latérales 208A, 208B, dans la zone arrière 206, et en plus dans la zone périphérique 200. Dans ce cas, les images synthétiques sont affichées en superposition sur les images réelles dans la zone périphérique 200.

Avantageusement, l'ensemble de gestion 42 comporte en outre des moyens 72 de commande d'affichage de symboles représentatifs de paramètres de vol.

Les moyens de commande 72 sont par exemple propres à afficher des informations alphanumériques, des informations analogiques comme des échelles, ou/et des commandes à actionner par l'utilisateur.

Ces symboles sont par exemple représentatifs d'au moins un des paramètres suivants : indicateur d'altitude, indicateur de situation horizontale, vitesse air, altitude, vitesse verticale, vitesse air corrigée, information moteur, conformation de sustentation de l'aéronef, etc.

Dans l'exemple représenté sur la figure 3, les moyens de commande 72 sont propres à afficher sur l'afficheur 36, indépendamment du positionnement des zones 200 à 208B, une échelle de vitesse 90, une échelle d'altitude 92, un symbole 94 ou maquette représentatif de la position de l'aéronef 12 et de son assiette longitudinale, une échelle 96 d'assiette longitudinale, un indicateur d'assiette longitudinale nulle 98 et un indicateur de cap 95.

Selon l'invention, l'ensemble de gestion comporte en outre des moyens 218 d'affichage de symboles représentatifs des éléments de guidage et d'approche vers la piste, tels qu'une ligne 220, représentant l'axe de la piste.

L'interface homme-machine 44 comporte de préférence un organe 102 de réglage de la luminosité de l'affichage de l'image synthétique dans la zone périphérique 200, et éventuellement de l'image réelle affichée dans les zones 202 à 208B.

Dans une variante, l'interface homme-machine 44 comporte un organe 104 de saisie manuelle de la position verticale de décision DP, dans le cas où cette position n'est pas tabulée dans une base de données 45A présente dans l'ensemble 38 ou/et dans le système de navigation de l'aéronef 12.

Un premier procédé de visualisation selon l'invention va maintenant être décrit, en référence à l'approche d'un aéronef 12 vers une piste d'atterrissage 18 localisée sur un terrain 16.

Initialement, lorsque le système 10 est activé, les dimensions de l'afficheur 36 correspondent à un volume d'observation 44A dans l'espace situé à l'avant de l'aéronef 12, défini sensiblement par une pyramide ou par un cône.

A chaque instant T de mise à jour de l'affichage du système 10, par exemple à une fréquence supérieure à 5 Hz et comprise entre 5 Hz et 60 Hz, l'ensemble de gestion 42 commande avantageusement l'affichage dynamique d'images synthétiques provenant de l'ensemble de génération d'images synthétiques 38 sur l'afficheur 36.

A cet effet, l'ensemble de génération 38 détermine à chaque instant T la position courante de l'aéronef 12 sur la base des données reçues du système de positionnement 30. Il génère dynamiquement une image synthétique représentative du terrain situé dans le volume d'observation 44A à l'avant de l'aéronef. Cette image synthétique comporte au moins une représentation synthétique surfacique du terrain 16 situé en regard de l'aéronef 12.

Lorsque la piste 18 entre dans le volume d'observation 44A, l'ensemble de gestion 42 relève les dimensions topographiques de la piste 18 dans la base de données 45A et calcule les dimensions et la position de la zone centrée 202 sur l'afficheur 36 sur cette base.

De même, en fonction des dimensions de la piste, l'ensemble de gestion 42 calcule la position et l'étendue topographique DB, DA des zones périphériques 208A, 208B et de la zone arrière 206 et détermine leurs dimensions et leurs positions sur l'afficheur 36.

Puis, les moyens de définition 210 déterminent dynamiquement la longueur L sur l'afficheur 36 de la zone avant 206 située à l'avant de la piste.

Les premiers moyens de calcul 210A interrogent la base de données 45A pour déterminer la position verticale de décision DP (altitude de décision DA ou hauteur de décision DH) correspondant à l'approche choisie sur la piste 18. En variante, le pilote entre manuellement cette position verticale de décision DP.

Ensuite, en référence aux figures 4 et 6, les premiers moyens de calcul 210A déterminent la distance topographique d'approche D1 séparant horizontalement le seuil de piste 212 et la projection 211A de la position théorique 211B de l'aéronef 12 à la position verticale de décision DP, sur une droite horizontale passant par le seuil de piste 212.

Cette distance D1 est calculée en fonction de la position verticale de décision DP, la pente γ souhaitée de descente, et la position topographique du seuil 212 de la piste 18, et éventuellement la position verticale de référence RDP souhaitée au seuil, à savoir l'altitude de référence au seuil RDA, ou la hauteur de référence au seuil RDH, par exemple par l'équation :

$$D1 = \frac{(DP - RDP)}{\tan \gamma}.$$

Une fois cette distance D1 déterminée, les moyens de calcul 210A en déduisent la distance topographique D2, par exemple en multipliant la distance D1 par un multiple choisi, compris entre 1 et 3, et avantageusement compris entre 1,2 et 2.

Puis, les deuxièmes moyens de calcul 210B déterminent la longueur L de la zone avant 204 sur l'afficheur 36, et sa position, en fonction de la distance D2 calculée, et de la position de l'aéronef 12.

L'ensemble de gestion 42 affiche alors à chaque instant T dans la zone périphérique 200 une image synthétique engendrée dynamiquement par l'ensemble de génération 38.

L'ensemble de gestion 42 maintient simultanément la zone centrée 202, la zone avant 204 et avantageusement, les zones latérales 208A, 208B et la zone arrière 206, dépourvues de représentation synthétique surfacique du terrain 16.

Dans une première variante, ces zones 202 à 208B sont maintenues sans image.

Le pilote observe alors par transparence à travers l'afficheur 36 le terrain situé en regard de ces zones, et particulièrement dans la zone avant 204.

En variante, une image réelle obtenue à partir de données d'images prises par l'ensemble de génération d'images réelles 40 est affichée dans au moins une des zones 204 à 208B, et notamment dans la zone avant 204.

Par ailleurs, une troisième région 65 située au-dessus de la première région 60, représentative du ciel présent au-dessus du terrain 16 peut-être laissée transparente, en fonction de l'attitude de l'aéronef 12.

Grâce à l'invention qui vient d'être décrite, la longueur L de la zone avant 204 sur l'afficheur 36 est choisie suffisamment grande pour que le pilote puisse observer tous les détails dans cette zone, bien avant qu'il atteigne la position verticale de décision. Ainsi, cette longueur L est choisie avantageusement pour inclure la vision réelle d'une rampe d'approche sur la piste 18.

Ceci lui permet d'apercevoir en réel, des indications géographiques sur la position de la piste, ainsi que les moyens de guidage de l'atterrissage, tels que les rampes lumineuses d'approche. Il peut ainsi anticiper la collecte d'informations nécessaires à la décision qu'il doit prendre à la hauteur de décision.

La longueur L de la zone avant est en outre choisie suffisamment courte pour bénéficier des informations synthétiques à l'avant de cette zone.

Par suite, lorsqu'il atteint la position verticale de décision (hauteur ou altitude de décision), le pilote dispose déjà d'informations utiles pour s'assurer qu'il observe bien la piste, et/ou son environnement ou au contraire pour remettre les gaz si cela est nécessaire.

Dans la configuration de la figure 3, lorsque l'aéronef 12 est éloigné de la piste 18, la zone périphérique 200 contenant l'image synthétique entoure totalement les zones 204 à 208B dépourvues de représentation synthétique surfacique du terrain 16.

Au contraire, lorsque l'aéronef se rapproche de la piste 12, l'étendue des zones 204 à 208B augmente significativement, permettant au pilote d'apprécier en réel l'environnement de la piste 18 et de son approche, sans les biais éventuels d'une image synthétique.

Dans une variante, certains éléments particuliers situés dans la zone périphérique 200 peuvent être laissés sans affichage d'une image synthétique ou présenter un affichage d'une image réelle.

A l'inverse, les zones 202 à 208B peuvent comprendre une pluralité d'indicateurs synthétiques, tel que des points de repère, des lignes de terrain obtenues à partir de la base de données 45A.

Dans une autre variante, l'opacité de l'image synthétique affichée dans la zone périphérique 200 est inférieure à 100%, et notamment comprise entre 1 % et 99 % pour permettre une observation partielle du terrain situé à l'arrière de l'afficheur 36.

Dans encore une autre variante, l'afficheur 36 du système de visualisation 10 selon l'invention est choisi parmi l'un ou plusieurs des écrans tête basse 24A à 24D. Dans ce cas, l'ensemble de gestion 42 affiche dans la deuxième région une image réelle fournie par l'ensemble de génération d'images réelles 40.

Dans l'exemple représenté sur les figures, la zone périphérique 200 contenant l'image synthétique et les zones 202 à 208B occupent la totalité de l'afficheur 36, la zone périphérique 200 entourant les zones 204 à 208B.

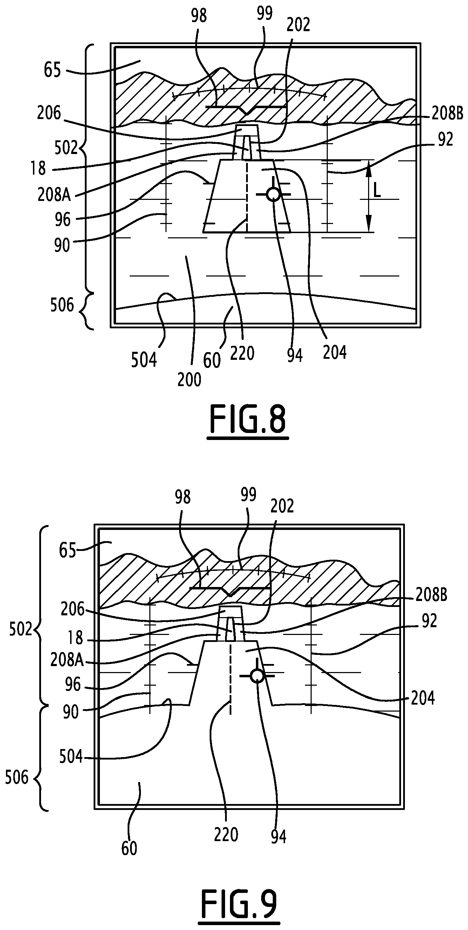

Dans la variante illustrée par les figures 8 et 9, dans au moins certaines configurations de l'aéronef 12, ces zones sont disposées dans une première région 502 de l'afficheur 36, délimitée par un bord 504, une deuxième région 506 de l'afficheur 36 délimitée par le bord 504 étant maintenue sans affichage de représentation synthétique surfacique du terrain 16 provenant de l'ensemble de génération 38.

Avantageusement, la première région 502 est située au dessus de la deuxième région 506 et le bord 504 de la première région 502 est un bord inférieur, dont la position peut varier dynamiquement. Une image réelle provenant de l'ensemble de génération 40 peut être affichée dans la deuxième région 506, comme illustré sur la figure 8.

Sur la figure 8, le bord 504 de la première région 506 est situé au dessous et totalement à l'écart de la zone avant 204.

Puis, au voisinage de la piste 18 (figure 9), la zone avant 204 peut être avalée au moins partiellement par la deuxième région 506, définissant ainsi une zone sans affichage d'image synthétique en forme de T inversé.

**Revendications**

1. Système (10) de visualisation pour aéronef (12), comprenant :

   - un afficheur (36) ;
   - un ensemble (38) de génération dynamique d'images synthétiques, les images synthétiques comprenant au moins une représentation synthétique surfacique du terrain (16) situé en regard de l'aéronef (12) ;
   - un ensemble (42) de gestion de l'interface graphique de l'afficheur (36), propre à commander l'affichage, sur au moins une première région de l'afficheur (36), d'une zone périphérique (200) formée d'une image synthétique comprenant au moins une représentation synthétique surfacique du terrain (16) provenant de l'ensemble de génération d'images synthétiques (38) ;

   l'ensemble de gestion (42) étant propre à maintenir au moins une zone (202) représentative de la position d'une piste d'atterrissage (18), centrée sur la piste d'atterrissage (18) et au moins une zone avant (204), contigüe à la zone centrée (202), sensiblement dépourvues de représentation synthétique surfacique du terrain (16), la zone périphérique (200) s'étendant au moins partiellement autour de la zone centrée (202) et/ou de la zone avant (204), **caractérisé en ce que** l'ensemble de gestion (42) comporte des moyens (210) de définition dynamique de la longueur (L) de la zone avant (204) sur l'afficheur (36) en fonction d'une position verticale de décision (DP) associée à une approche choisie de ladite piste d'atterrissage (18) et en fonction de la position de l'aéronef (12).

2. Système (10) selon la revendication 1, **caractérisé en ce qu'**il comporte au moins une base de données (45A) associant à chaque approche sur chaque piste d'atterrissage (18) parmi une pluralité d'approches sur une pluralité de pistes d'atterrissage, une position verticale de décision (DP) correspondant à ladite approche sur ladite piste d'atterrissage (18), les moyens de définition de la longueur (L) de la zone avant (210) sur l'afficheur étant propres à recueillir l'information relative à la position verticale de décision (DP) associée à ladite approche sur ladite piste d'atterrissage (18) située en regard de l'aéronef (12), à partir de la base de données (45A).

3. Système (10) selon l'une quelconque des revendications précédentes, **caractérisé en ce que** les moyens de définition de la longueur (L) de la zone avant (210) sur l'afficheur (36) comprennent des premiers moyens (210A) de calcul d'une distance topographique (D2) fonction de la distance topographique d'approche (D1) destinée à séparer horizontalement l'aéronef (12) à la position verticale de décision (DP) correspondant à ladite approche de la piste d'atterrissage (18), et des deuxièmes moyens (210B) de calcul de la longueur de la zone avant (204) sur l'afficheur (36) en fonction de la distance topographique (D2).

4. Système (10) selon la revendication 3, **caractérisé en ce que** les deuxièmes moyens de calcul (210B) sont propres à calculer la distance topographique (D2) en fonction d'un multiple de la distance d'approche (D1), le multiple étant compris entre 1 et 3, avantageusement entre 1,2 et 1,8.

5. Système (10) selon l'une quelconque des revendications précédentes, **caractérisé en ce que** l'ensemble de gestion (42) est propre à maintenir dépourvue de représentation synthétique surfacique du terrain au moins une zone latérale (208A, 208B) et une zone arrière (206) située autour de la zone centrée (202).

6. Système (10) selon l'une quelconque des revendications précédentes, **caractérisé en ce que** la zone avant (204) présente une largeur supérieure à la largeur de la zone centrée (202).

7. Système (10) selon l'une quelconque des revendications précédentes, **caractérisé en ce qu'**il comporte un ensemble (40) de génération d'images réelles du terrain situé en regard de l'aéronef, comprenant au moins un capteur (50) de détection, l'ensemble de gestion (42) étant propre à commander l'affichage dynamique, dans la zone avant (204) et/ou dans la zone centrée (202), d'une image réelle du terrain situé en regard de l'aéronef, simultanément avec l'affichage d'une image synthétique dans la zone périphérique (200).

8. Système (10) selon la revendication 7, **caractérisé en ce que** l'ensemble de gestion (42) est propre à maintenir la zone périphérique (200) dépourvue d'images réelles engendrées par l'ensemble de génération d'images réelles (40).

9. Système (10) selon l'une quelconque des revendications précédentes, **caractérisé en ce que** l'ensemble de gestion (42) est propre à maintenir, dans certaines configuration d'évolution de l'aéronef, une deuxième région (506) de l'afficheur délimitée par un bord (504) de la première région (502), dépourvue de représentation synthétique surfacique du terrain.

10. Système (10) selon l'une quelconque des revendications précédentes, **caractérisé en ce que** l'afficheur (36) est un afficheur au moins partiellement transparent (26), tel qu'un écran semi-transparent placé devant un pare-brise du cockpit, un système de projection d'images sur le pare-brise du cockpit, un pare-soleil semi transparent, un viseur de casque ou une lunette semi-transparente proche de l'oeil.

11. Système (10) selon la revendication 10, **caractérisé en ce qu'**il comporte un organe de réglage (102) de l'opacité de l'afficheur (26), avantageusement situé sur une manette de commande de l'aéronef, tels que le manche ou la manette des gaz.

12. Procédé de visualisation dans un aéronef (12), comprenant les étapes suivantes :

- fourniture d'un système (10) selon l'une quelconque des revendications précédentes ;
- affichage, par l'ensemble de gestion (42), dans au moins une première région de l'afficheur (36) d'une zone périphérique (200) comportant une image synthétique provenant de l'ensemble de génération d'images synthétiques (38), les images synthétiques comportant une représentation synthétique surfacique du terrain (16), l'ensemble de gestion (42) maintenant au moins une zone (202) représentative de la position d'une piste d'atterrissage (18), centrée sur la piste d'atterrissage (18) et au moins une zone avant (204), contigüe à la zone centrée (202), sensiblement dépourvues de représentation synthétique surfacique du terrain (16), la zone périphérique (200) s'étendant au moins partiellement autour de la zone centrée (202) et/ou de la zone avant (204) ;
- définition dynamique par l'ensemble de gestion (42), de la longueur (L) de la zone avant (204) sur l'afficheur (36) en fonction d'une position verticale de décision (DP) associée à une approche choisie de la dite piste d'atterrissage (18) et en fonction de la position de l'aéronef.

13. Procédé selon la revendication 12, **caractérisé en ce qu'**il comporte une étape de recueil, par les moyens de définition de la longueur (L) de la zone avant (210) sur l'afficheur (36), d'une position verticale de décision (DP) associée à la dite piste d'atterrissage (18) dans au moins une base de données (45A) associant une position verticale de décision (DP) à chaque approche sur chaque piste d'atterrissage parmi une pluralité d'approches sur une pluralité de pistes d'atterrissage (18).

14. Procédé selon l'une des revendications 12 ou 13, **caractérisé en ce que** l'étape de définition de la longueur de la zone avant (204) sur l'afficheur comporte le calcul d'une distance d'approche (D1) destinée à séparer horizontalement l'aéronef (12) à la position verticale de décision (DP) associée à une approche de la piste d'atterrissage, et le calcul de la longueur (L) de la zone avant (204) sur l'afficheur (36) en fonction de la distance d'approche calculée (D1), notamment en fonction d'un multiple de la distance d'approche calculée (D1) compris entre 1 et 3, avantageusement entre 1,2 et 1,8.

15. Procédé selon l'une quelconque des revendications 12 à 14, **caractérisé en ce qu'**il comporte une étape de prise de données d'images réelles par au moins un ensemble de génération d'images réelles (40), puis de génération d'une image réelle à partir des données d'images prises par l'ensemble de génération d'images réelles (40), le procédé comportant l'affichage, par l'ensemble de gestion (42) d'une image réelle obtenue à partir de l'ensemble de génération d'images réelles (40) dans la zone centrée (202) et/ou dans la zone avant (204).

16. Procédé selon l'une quelconque des revendications 12 à 15, **caractérisé en ce que** l'ensemble de gestion (42) maintient, dans certaines configuration d'évolution de l'aéronef, une deuxième région (506) de l'afficheur délimitée par un bord (504) de la première région (502), dépourvue de représentation synthétique surfacique du terrain.

**Patentansprüche**

1. System (10) zur Visualisierung für ein Luftfahrzeug (12), aufweisend:

- eine Anzeigevorrichtung (36),
- eine Einrichtung (38) zur dynamischen Erzeugung von synthetischen Bildern, wobei die synthetischen Bilder wenigstens eine synthetische Oberflächendarstellung des dem Luftfahrzeug (12) gegenüberliegenden Terrains (16) umfassen,
- eine Einrichtung (42) zum Betreiben der Grafik-Schnittstelle der Anzeigevorrichtung (36), die imstande ist, auf wenigstens einem ersten Bereich der Anzeigevorrichtung (36), das Anzeigen eines peripheren Bereichs (200) zu befehlen, der von einem synthetischen Bild gebildet wird, welches wenigstens eine synthetische Oberflächendarstellung des Terrains (16) umfasst, die von der Einrichtung zur Erzeugung von synthetischen Bildern (38) stammt, wobei die Einrichtung zum Betreiben (42) imstande ist, wenigstens einen für die Position einer Landebahn (18) repräsentativen Bereich (202), der zu der Landebahn (18) zentriert ist, und wenigstens einen vorgelagerten Bereich (204), der an den zentrierten Bereich (202) angrenzt, im Wesentlichen frei von synthetischer Oberflächendarstellung des Terrains (16) aufrechtzuerhalten, wobei sich der periphere Bereich (200) wenigstens teilweise um den zentrierten Bereich (202) und/oder den vorgelagerten Bereich (204) erstreckt,

**dadurch gekennzeichnet, dass** die Einrichtung zum Betreiben (42) aufweist Mittel (210) zur dynamischen Definition der Länge (L) des vorgelagerten Bereichs (204) auf der Anzeigevorrichtung (36) in Abhängigkeit von einer vertikalen Entscheidungs-Position (DP), die einem gewählten Anflug der besagten Landebahn (18) zugeordnet ist, und in Abhängigkeit von der Position des Luftfahrzeugs (12).

2. System (10) gemäß Anspruch 1, **dadurch gekennzeichnet, dass** es aufweist wenigstens eine Datenbank (45A), die jedem Anflug auf jede Landebahn (18) unter einer Mehrzahl von Anflügen auf eine Mehrzahl von Landebahnen eine vertikale Entscheidungs-Position (DP) zuordnet, die zu dem besagten Anflug auf die besaget Landebahn (18) korrespondiert, wobei die Mittel zur Definition der Länge (L) des vorgelagerten Bereichs (210) auf der Anzeigevorrichtung imstande sind, die Informationen bezüglich der vertikalen Entscheidungs-Position (DP), die dem besagten Anflug auf die besagte, dem Luftfahrzeug (12) gegenüberliegende Landebahn (18) zugeordnet ist, aus der Datenbank (45) zu lesen.

3. System (10) gemäß irgendeinem der vorhergehenden Ansprüche, **dadurch gekennzeichnet, dass** die Mittel zur Definition der Länge (L) des vorgelagerten Bereichs (210) auf der Anzeigevorrichtung (36) aufweisen erste Mittel (210A) zur Berechnung einer topografischen Distanz (D2) in Abhängigkeit von der topografischen Anflug-Distanz (D1), die dazu bestimmt ist, das Luftfahrzeug (12) horizontal zu der vertikalen Entscheidungs-Position (DP) zu separieren, die zu dem besagten Anflug der Landebahn (18) korrespondiert, und zweite Mittel (210B) zur Berechnung der Länge des vorgelagerten Bereichs (204) auf der Anzeigevorrichtung (36) in Abhängigkeit von der topografischen Distanz (D2).

4. System (10) gemäß Anspruch 3, **dadurch gekenn-**

**zeichnet, dass** die zweiten Mittel zur Berechnung (210B) imstande sind, die topografische Distanz (D2) in Abhängigkeit von einem Mehrfachen der Anflug-Distanz (D1) zu berechnen, wobei das Mehrfache zwischen 1 und 3, vorteilhaftweise zwischen 1,2 und 1,8 beträgt.

5. System (10) gemäß irgendeinem der vorhergehenden Ansprüche, **dadurch gekennzeichnet, dass** die Einrichtung zum Betreiben (42) imstande ist, wenigstens einen lateralen Bereich (208A, 208B) und einen nachgelagerten Bereich (206), der um den zentrierten Bereich (202) herum angeordnet ist, frei von synthetischer Oberflächendarstellung des Terrains aufrechtzuerhalten.

6. System (10) gemäß irgendeinem der vorhergehenden Ansprüche, **dadurch gekennzeichnet, dass** der vorgelagerte Bereich (204) eine Breite hat, die größer ist als die Breite des zentrierten Bereichs (202).

7. System (10) gemäß irgendeinem der vorhergehenden Ansprüche, **dadurch gekennzeichnet, dass** es aufweist eine Einrichtung (40) zur Erzeugung von reellen Bildern des dem Luftfahrzeug gegenüberliegenden Terrains, welche aufweist wenigstens einen Detektionssensor (50), wobei die Einrichtung zum Betreiben (42) imstande ist, im vorgelagerten Bereich (204) und/oder im zentrierten Bereich (202), das dynamische Anzeigen eines reellen Bildes des dem Luftfahrzeug gegenüberliegenden Terrains zu befehlen simultan mit dem Anzeigen eines synthetischen Bildes im peripheren Bereich (200).

8. System (10) gemäß Anspruch 7, **dadurch gekennzeichnet, dass** die Einrichtung zum Betreiben (42) imstande ist, mittels der Einrichtung zur Erzeugung von reellen Bildern (40) den peripheren Bereich (200) frei von reellen Bildern zu halten.

9. System (10) gemäß irgendeinem der vorhergehenden Ansprüche, **dadurch gekennzeichnet, dass** die Einrichtung zum Betreiben (42) imstande ist, in gewissen Entwicklungskonfigurationen des Luftfahrzeugs, einen zweiten Bereich (506) der Anzeigevorrichtung, der von einem Rand (504) des ersten Bereichs (502) begrenzt ist, frei von synthetischer Oberflächendarstellung des Terrains zu halten.

10. System (10) gemäß irgendeinem der vorhergehenden Ansprüche, **dadurch gekennzeichnet, dass** die Anzeigevorrichtung (36) eine zumindest teilweise transparente Anzeigevorrichtung (26) ist, wie zum Beispiel ein semi-transparenter Bildschirm, der vor einer Windschutzscheibe des Cockpits platziert ist, ein System zur Projektion von Bildern auf die Windschutzscheibe des Cockpits, eine semi-transparente Sonnenblende, ein Helmvisier oder eine semitransparente Brille nahe dem Auge.

11. System (10) gemäß dem Anspruch 10, **dadurch gekennzeichnet, dass** es aufweist ein Organ zum Einstellen (102) der Lichtundurchlässigkeit der Anzeigevorrichtung (26), vorteilhafterweise angeordnet an einem Steuer-Bedienhebel des Luftfahrzeugs, wie zum Beispiel dem Steuer-Joystick oder dem Gashebel.

12. Verfahren zur Visualisierung in einem Luftfahrzeug (12), aufweisend die folgenden Schritte:

- Bereitstellen eines Systems (10) gemäß irgendeinem der vorhergehenden Ansprüche,
- Anzeigen, mittels der Einrichtung zum Betreiben (42), in wenigstens einem ersten Bereich der Anzeigevorrichtung (36) einen peripheren Bereich (200), der ein synthetisches Bild aufweist, das von der Einrichtung zur Erzeugung synthetischer Bilder (38) stammt, wobei die synthetischen Bilder eine synthetische Oberflächendarstellung des Geländes (16) umfassen, wobei die Einrichtung zum Betreiben (42) wenigstens einen für die Position einer Landebahn (18) repräsentativen Bereich (202), der auf die Landebahn (18) zentriert ist, und wenigstens einen vorgelagerten Bereich (204), der an den zentrierten Bereich (202) angrenzt, im Wesentlichen frei von synthetischer Oberflächendarstellung des Terrains (16) aufrechtzuerhalten, wobei der periphere Bereich (200) sich wenigstens teilweise um den zentrierten Bereich (202) und/oder den vorgelagerten Bereich (204) herum erstreckt,
- dynamisches Definieren, mittels der Einrichtung zum Betreiben (42), der Länge (L) des vorgelagerten Bereichs (204) auf der Anzeigevorrichtung (36) in Abhängigkeit von einer vertikalen Entscheidungs-Position (DP), die einem gewählten Anflug der besagten Landebahn (18) zugeordnet ist, und in Abhängigkeit von der Position des Luftfahrzeugs.

13. Verfahren gemäß Anspruch 12, **dadurch gekennzeichnet, dass** es aufweist einen Schritt des Lesens, mittels der Mittel zur Definition der Länge (L) des vorgelagerten Bereichs (210) auf der Anzeigevorrichtung (36), einer vertikalen Entscheidungsposition (DP), die der besagten Landebahn (18) zugeordnet ist, in wenigstens einer Datenbank (45A), die eine vertikale Entscheidungs-Position (DP) jedem Anflug auf jede Landebahn unter einer Mehrzahl von Anflügen auf eine Mehrzahl von Landebahnen (18) zuordnet.

14. Verfahren gemäß einem der Ansprüche 12 oder 13, **dadurch gekennzeichnet, dass** der Schritt des Definierens der Länge des vorgelagerten Bereichs (204) auf der Anzeigevorrichtung aufweist das Berechnen einer Anflug-Distanz (D1), die dazu bestimmt ist, das Luftfahrzeug (12) zu der vertikalen Entscheidungs-Position (DP), die einem Anflug der Landebahn zugeordnet ist, horizontal zu separieren, und das Berechnen der Länge (L) des vorgelagerten Bereichs (204) auf der Anzeigevorrichtung (36) in Abhängigkeit von der berechneten Anflug-Distanz (D1), insbesondere in Abhängigkeit von einem Mehrfachen der berechneten Anflug-Distanz (D1), das zwischen 1 und 3, vorteilhafter zwischen 1, 2 und 1,8 beträgt.

15. Verfahren gemäß irgendeinem der Ansprüche 12 bis 14, **dadurch gekennzeichnet, dass** es aufweist einen Schritt des Aufnehmens von reellen Bilddaten mittels wenigstens einer Einrichtung zur Erzeugung von reellen Bildern (40), danach des Erzeugens eines reellen Bildes ausgehend von den Bilddaten, die von der Einrichtung zur Erzeugung von reellen Bildern (40) aufgenommen wurden, wobei das Verfahren aufweist das Anzeigen, mittels der Einrichtung zum Betreiben (42), eines reellen Bildes, das ausgehend von der Einrichtung zur Erzeugung von reellen Bilddaten (40) erlangt wurde, im zentrierten Bereich (202) und/oder im vorgelagerten Bereich (204).

16. Verfahren gemäß irgendeinem der Ansprüche 12 bis 15, **dadurch gekennzeichnet, dass** die Einrichtung zum Betreiben (42), in gewissen Entwicklungs-Konfigurationen des Luftfahrzeugs, einen zweiten Bereich (506) der Anzeigevorrichtung, der von einem Rand (504) des ersten Bereichs (502) begrenzt ist, frei von synthetischer Oberflächendarstellung des Terrains aufrechtzuerhalten.

**Claims**

1. A vision (10) system for an aircraft (12), comprising:

- a display (36);
- an assembly (38) for dynamically generating synthetic images, the synthetic images comprising at least one synthetic surface representation of the terrain (16) situated facing the aircraft (12);
- a management assembly (42) for the graphic interface of the display (36), capable of controlling the display, on at least a first region of the display (36), of a peripheral area (200) formed from a synthetic image comprising at least one synthetic surface representation of the terrain (16) coming from the synthetic image generating assembly (38);

the management assembly (42) being capable of maintaining at least one area (202) representative of the position of a landing runway (18), centered on the landing runway (18) and at least one front area (204), adjacent to the centered area (202), substantially with no synthetic surface representation of the terrain (16), the peripheral area (200) extending at least partially around the centered area (202) and/or the front area (204),

**characterized in that** the management assembly (42) includes means (210) for dynamically defining the length (L) of the front area (204) of the display (36) as a function of a vertical decision position (DP) associated with a chosen approach for said landing runway (18) and as a function of the aircraft (12) position.

2. The system (10) according to claim 1, **characterized in that** it includes at least one database (45A) associating each approach on each landing runway (18) from among a plurality of approaches over a plurality of landing runways with a vertical decision position (DP) corresponding to said approach on said landing runway (18), the means for defining the length (L) of the front area (210) on the display being capable of collecting the information relative to the vertical decision position (DP) associated with said approach on said landing runway (18) situated facing the aircraft (12), from the database (45A).

3. The system (10) according to any one of the preceding claims, **characterized in that** the means for defining the length (L) of the front area (210) on the display (36) comprise first means (210A) for computing a topographical distance (D2) depending on the topographical approach distance (D1) designed to horizontally separate the aircraft (12), at the vertical decision position (DP) corresponding to said approach of the landing runway (18), and second means (210B) for computing the length of the front area (204) on the display (36) as a function of the topographical distance (D2).

4. The system (10) according to claim 3, **characterized in that** the second computation means (210B) are able to compute the topographical distance (D2) as a function of a multiple of the approach distance (D1), the multiple being comprised between 1 and 3, advantageously between 1.2 and 1.8.

5. The system (10) according to any one of the preceding claims, **characterized in that** the management assembly (42) is capable of keeping at least one side area (208A, 208B) and at least one rear area (206) situated around the center area (202) free of any synthetic surface representation.

6. The system (10) according to any one of the preceding claims, **characterized in that** the front area (204) has a larger width than the width of the centered area (202).

7. The system (10) according to any one of the preceding claims, **characterized in that** it includes an assembly (40) for generating real images of the terrain situated facing the aircraft, comprising at least one detection sensor (50), the management assembly (42) being capable of controlling the dynamic display, in the front area (204) and/or the centered area (202), of a real image of the terrain situated facing the aircraft, simultaneously with the display of a synthetic image in the peripheral area (200).

8. The system (10) according to claim 7, **characterized in that** the management assembly (42) is capable of maintaining the peripheral area (200) free of real images created by the real image generating assembly (40).

9. The system (10) according to any one of the preceding claims, **characterized in that** the management assembly (42) is capable of maintaining, in certain movement configurations of the aircraft, a second region (506) of the display delimited by an edge (504) of the first region (502), free of any synthetic surface representation of the terrain.

10. The system (10) according to any one of the preceding claims, **characterized in that** the display (36) is an at least partially transparent display (26), such as a semitransparent screen placed in front of the windshield of the cockpit, a system for projecting images on the windshield of the cockpit, a semitransparent sunshade, a helmet visor or semitransparent glasses close to the eye.

11. The system (10) according to claim 10, **characterized in that** it includes a member (102) for adjusting the opaqueness of the display (26), advantageously situated on a control lever of the aircraft, such as the control stick or the throttle.

12. A vision method in an aircraft (12), comprising the following steps:

   - providing a system (10) according to any one of the preceding claims;
   - displaying, using the management assembly (42), in at least a first region of the display (36), a peripheral area (200) including a synthetic image coming from the synthetic image generating assembly (38), the synthetic images including a synthetic surface representation of the terrain (16),

   the management assembly (42) maintaining at least one area (202) representative of the position of a landing runway (18), centered on the landing runway (18) and at least one front area (204), adjacent to the centered area (202), substantially with no synthetic surface representation of the terrain (16), the peripheral area (200) extending at least partially around the centered area (202) and/or the front area (204),
- dynamically defining, using the management assembly (42), the length (L) of the front area (204) on the display (36) as a function of a vertical decision position (DP) associated with a chosen approach of said landing runway (18) and as a function of the aircraft position.

13. The method according to claim 12, **characterized in that** it includes a step, using the means for defining the length (L) of the front area (210) on the display (36), for collecting a vertical decision position (DP) associated with said landing runway (18) in at least one database (45A) associating a vertical decision position (DP) with each approach on each landing runway from among a plurality of approaches on a plurality of landing runways (18).

14. The method according to one of claims 12 or 13, **characterized in that** the step for defining the length of the front area (204) on the display includes computing an approach distance (D1) intended to horizontally separate the aircraft (12), at the vertical decision position (DP) associated with the approach, of the landing runway, and computing the length (L) of the front area (204) on the display (36) as a function of the computed approach distance (D1), in particular as a function of a multiple of the computed approach distance (D1) comprised between 1 and 3, advantageously between 1.2 and 1.8.

15. The method according to any one of claims 12 to 14, **characterized in that** it includes a step for acquiring real image data by at least one real image generating assembly (40), then generating a real image from image data taken by the real image generating assembly (40), the method including the display, by the management means (42), of a real image obtained from the real image generating assembly (40) in the centered area (202) and/or in the front area (204).

16. The method according to any one of claims 12 to 15, **characterized in that** the management assembly (42) maintains, in certain movement configurations of the aircraft, a second region (506) of the display delimited by an edge (504) of the first region (502), free of any synthetic surface representation of the terrain.

FIG.1

FIG.2

_FIG.3_

_FIG.7_

_FIG.4_

EP 2 717 229 B1

FIG.5

FIG.6

FIG.8

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Design and Flight Test of a Primary Flight Display Combined Vision System. *SAE International Technical Papers-Int. Tour,* Octobre 2011, 738-750